Europäisches Patentamt

European Patent Office

Office européen des brevets

(11) Publication number: **0 059 050**
**B1**

(12) **EUROPEAN PATENT SPECIFICATION**

(45) Date of publication of patent specification: **24.04.85**

(51) Int. Cl.⁴: **C 08 B 30/12, C 13 K 1/06**

(21) Application number: **82300725.7**

(22) Date of filing: **12.02.82**

(54) Method of modifying starch by UHF radiation.

(30) Priority: **23.02.81 GB 8105611**

(43) Date of publication of application:
**01.09.82 Bulletin 82/35**

(45) Publication of the grant of the patent:
**24.04.85 Bulletin 85/17**

(84) Designated Contracting States:
**AT BE CH DE FR GB IT LI NL SE**

(56) References cited:
**DE-A-2 934 464**
**US-A-3 620 764**

**DIE STÄRKE, vol. 26, no. 5, 1974, pages
160-164; J. MLADEK et al.: "Die dielektrischen
Eigenschaften der Stärke im
Mikrowellenbereich als Grundlage für die
Feuchtigkeitsbestimmung".
CHEMICAL ABSTRACTS, vol. 84, no. 20, 17th
May 1976, page 107, no. 137399r, Columbus
Ohio (USA);
CHEMICAL ABSTRACTS, vol. 95, no. 5, 3rd
August 1981, page 578, no. 40827t, Columbus
Ohio (USA);**

(73) Proprietor: **CPC INTERNATIONAL INC.
International Plaza P.O. Box 8000
Englewood Cliffs New Jersey 07632 (US)**

(72) Inventor: **Marquette, Georges Henri Albert Lab.
Recherche
Société des Produits du Mais Rue Maréchal
Joffre
F-59320 Haubourdin (FR)**
Inventor: **Gonze, Michel
46, Avenue Ferdauci
B-1020 Brussels (BE)**
Inventor: **Lane, Christopher
Industrial Grain Products 995, Mill Street
Montreal Quebec H3CIY5 (CA)**

(74) Representative: **Pennant, Pyers et al
Stevens, Hewlett & Perkins 5 Quality Court
Chancery Lane
London, WC2A 1HZ (GB)**

# 0 059 050

## Description

This invention relates to a method of modifying starch which involves the use of UHF (ultra-high frequency) radiation. Our EP—A—41316 (Priority: 25.04.80, Date of filing: 23.04.81, Date of publication of application: 09.12.81) describes a method of chemically modifying starch which involves submitting a mixture of starch and a reagent which reacts chemically with the starch to the action of UHF radiation. By contrast, the method of the present invention does not involve chemically reacting the starch with anything.

Starch has previously been subjected to UHF radiation for various purposes. UHF radiation has been used for heating or drying, at temperatures above 100°C, but no modification of structure or properties has been sought or reported. UHF radiation has been used for cooking or pre-cooking starch; by contrast the method of the present invention does not involve gelatinization of starch. UHF radiation has been used to heat gelatinized starch prior to hydrolysis; by contrast, the method of the present invention is concerned solely with native (ungelatinized) starch.

Starch has also been subjected to other treatments in order to modify its properties. Dextrinization involves treatment of starch at high temperature and low moisture content, and effects both decomposition of the starch chain and polymerization of the decomposition products; the resulting product is no longer a true starch. Drying on rollers and extrusion treatments produce exclusively gelatinized starch. Treatment of starch under high pressure and low temperature has been studied in the laboratory; this results in a statistical de-polymerization of the starch chain and a total destruction of the structure of the starch granules, so that again the product is not a true starch.

Heat moisture treatment involves submitting native starch at a water content generally in the range 15—30% to a temperature of the order of 80°C for several hours. No study has been made of the crystalline regions, but it is known that the X-Ray spectra of certain starches (e.g. potato starch) can be modified by heat moisture treatment, whereas no modification of this kind is noted with normal maize starch. It is thus probable that there is some re-arrangement of the crystalline regions, but that heat-moisture treatment is not capable of reducing or destroying these regions. By contrast, UHF treatment according to the method of this invention is effected very quickly, and does result in reduction or destruction of the crystalline regions of the starch, with desirable results as described below.

The present invention provides a method of modifying ungelatinized starch, which method comprises subjecting a starting mixture of ungelatinized starch and water to UHF radiation under conditions chosen so that the starch reaches a maximum temperature of no greater than 100°C characterized in that the starting mixture contains from 25% to 60% by weight of water based on the combined weight of starch and water, that the starch is not significantly gelatinized as a result of the treatment, and that the final crystallinity of the starch is not more than half that of the untreated starch.

In another aspect, the invention provides a modified ungelatinized starch obtainable by the method above.

The nature of the starch used is not critical. Suitable starches include corn starch, potato starch, wheat starch, tapioca starch, rice starch, sorghum starch, waxy corn starch and waxy sorghum starch. The starch may be used in a mixture with other materials, for example in the form of flour, though this is not preferred. However, no material is present which reacts chemically with the starch under the conditions of treatment, since the invention involves the recovery of a starch rather than a starch derivative. The starch is in the native, i.e. granular, state at both the start and the end of the method; conditions of treatment are chosen such that there is no significant gelatinization of starch.

If the treated starch is made up into an aqueous slurry, for enzymatic hydrolysis or other further treatment, it is desirable that the slurry should have a viscosity such that it is easily handled. If substantial gelatinization has taken place during UHF radiation treatment, then the aqueous slurry may have an inconveniently high viscosity.

The moisture content of the starch at the start of the treatment is 25% to 60% by weight based on the combined weight of starch and water. The final moisture content will unavoidably be somewhat less than the starting moisture content, because the UHF treatment involves heating, but the drying effect of the UHF radiation should preferably be minimised.

At high water contents, the process becomes less efficient because an increasing proportion of the UHF radiation energy is absorbed by the free water. For this reason, the moisture content is generally held at no more than 50% by weight. Conveniently, starch filter cake of 32—35% moisture content may be used as the starting material.

The temperature of the starch necessarily rises during treatment, but is kept below 100°C. Also, the temperature is not allowed to rise to such an extent that the starch becomes significantly gelatinized; the temperature at which this occurs depends on the moisture content of the starch.

UHF radiation has a frequency in the range of 300 MHz to 300,000 MHz. Within this range, only certain specific bands are permitted for industrial use in many countries, and these include 915, 2450, 5800 and 22155 MHz. The frequency corresponding best to the activation energy of the H-OH dipole of the starch chain is the frequency 2450 MHz. It is believed that this activation results in orientation of the dipoles in the alternating radiation field, and that the oscillation which results breaks labile bonds whose presence makes the crystalline regions of starch granules so difficult to attack.

The time for which it is necessary to treat the starch to obtain the desired characteristics depends on various factors including the power available per unit weight of starch, the configuration of the sample being treated, and the temperature to which it is possible to subject to the starch. Ordinarily, the time of exposure to the UHF radiation will be from 20 seconds to 10 or possibly 15 minutes, preferably less than 5 minutes, and often less than 1 minute. The actual duration of UHF treatment will depend upon moisture content and microwave power of the equipment.

The nature of the equipment used is not critical. Conveniently such equipment may comprise a tunnel whose cavity forms a wave-guide for the UHF radiation and whose dimensions may determine the frequency of the radiation. Such equipment is commercially available from Industrie Microondes Internationale under the Trade Mark Gigatron.

The starch material may be passed through the tunnel on a conveyor belt, and the starch material thus treated can be bagged directly. Alternatively, the starch material may be placed in sacks or containers of a suitable material before treatment, and the sacks or containers themselves subjected to the UHF radiation. The alternative is only possible if the temperature during the treatment does not reach a level which damages the sacks or containers.

An effect achieved by the method of the present invention is the reduction or complete destruction of crystalline regions contained in the starch granules. It is known that these crystalline regions in various types of starch determine the structure of the starch granules and confer on them specific properties (rheological, reactivity to chemical agents and enzymes, swelling temperature, dispersibility). The reduction or destruction of these regions by means of UHF radiation results in native starches having specific modified properties (e.g. better rheological stability, lower peak viscosity, higher swelling temperature, improved hot water dispersibility, greater reactivity with chemical agents and enzymes).

Crystallinity of starch may be determined by a measurement of specific volume (H. N. Dengate et al, Starch, 30 (1978) No. 3, pages 80—84) followed by a calculation described by S. Nara in Die Staerke, 31 (1979) No. 3, pages 73—75. Knowing the specific volume of the starch under examination, the crystallinity X may be calculated using the formula

$$X = \frac{Va - Vo}{Va - Vc}$$

where

Va is the specific volume of the amorphous portion
Vc is the specific volume of the crystalline portion
Vo is the specific volume of the starch under examination.

For different kinds of starch:—

|                    | Va    | Vc    |
|--------------------|-------|-------|
| Maize starch       | 0.687 | 0.629 |
| Potato starch      | 0.673 | 0.629 |
| Waxy maize starch  | 0.673 | 0.629 |
| Tapioca starch     | 0.684 | 0.629 |

According to S. Nara the proportion of crystalline material in native starch is in the range from .3 to .47 of the total starch depending on the source of the starch, the remaining material being amorphous.

Specifically, the crystallinity of corn starch is 0.42 and of potato starch 0.34. To achieve a significant modification of properties by UHF radiation treatment, it is normally desirable to reduce the crystallinity of the starting material by at least 50%. As shown in the examples which follow it is very easy by UHF treatment to reduce the crystallinity to less than 0.1, even down to 0.0.

A characteristic feature of UHF radiation treatment is that, though the crystallinity of the starch is reduced or destroyed, the granular nature of the starch is not modified. It is believed that UHF treatment may result in breaking some branches at the α 1→6 linkages; that is to say, the side chains bonded to the main chains may be separated and thus made more accessible to the action of chemical reagents or enzymes. Only an activation of the H—OH dipoles could cause this kind of result without entailing the complete destruction of the structure of the granule within a reasonably short time at a temperature below 100°C.

Gelatinization may be determined by the following test. A 25 g sample of the starch is slurried in 100 ml of water at ambient temperature. The suspension is filtered on a paper filter and the filtrate examined. If the non-volatile content of the filtrate weighs less than 1.3 g, then the starch is said to be not significantly gelatinized.

In the examples which follow, Brabender viscosities are reported. A Brabender viscosity is measured around a cycle of heating and cooling of the starch milk in an appropriate apparatus. Heating and cooling are effected at 1.5°C per minute, and the cycle is as follows:—

| Time (minutes) | 0 | 30 | 40 | 70 | 80 |
|---|---|---|---|---|---|
| Temperature (°C) | 50 | 95 | 95 | 50 | 50 |

During the rise of temperature, the starch milk reaches, after several minutes, its swelling temperature, that is to say the granules of starch start to absorb water in their structure. The registered viscosity rises progressively.

After several further minutes, the internal bonds which maintain the stability of the granules are broken. The granules fall apart. The viscosity ceases to rise and very soon diminishes gradually as the temperature continues to rise to 95°C. One notes the peak viscosity and peak temperature.

After a pause at 95°C, the paste thus prepared is cooled at 1.5°C per minute at 50°C and maintained at that temperature of 10 minutes. During this operation the viscosity rises progressively as the temperature diminishes to reach, during the holding period at 50°C, a value characteristic of retrogradation.

All varieties of starch exhibit a reduction in Brabender peak viscosity as a result of UHF radiation treatment according to this invention. If treatment is continued for sufficient time, the Brabender peak simply disappears; that is to say, the viscosity does not fall at any stage along the Brabender profile. Starches treated according to this invention preferably have either no Brabender peak viscosity or a Brabender peak viscosity not more than half that of the untreated starch.

The effect of UHF radiation treatment on retrogradation viscosity is more varied; that of corn starch and waxy corn starch is reduced; that of potato starch is generally increased depending on the conditions; that of tapioca starch is not greatly altered. The effects may be of value in different ways, depending on the use to which the treated starch is to be put.

In the Examples which follow, enzyme Brabender peak viscosities are reported. These were obtained by a standard method using a Brabender amylograph. 31.5 g (dry basis) starch is dispersed in water to give 450 g of a 7% solids dispersion. The pH is adjusted to 6.5 and 0.1% α-amylase based on starch is added. The slurry is heated to 75°C and held at this temperature for 35 minutes. During this time, the viscosity rises and then falls and the peak value is noted. Enzyme Brabender peak viscosities provide an indication of the susceptibility of the starch to α-amylolysis. UHF radiation treated starches according to this invention have greater susceptibility to amylolytic enzyme attack than do the untreated starches.

In the Examples which follow, hot water dispersibility is reported. To measure dispersibility, 500 ml water is maintained at 90°C and stirred at 133 rpm by means of a semi-submerged vane stirrer. 5 g of the starch under test (sieved to particle size below 0.5 µm) is released on the surface of the water. After 15 seconds the water is let out through a stop-cock with continuous stirring, and the proportion of starch dispersed is estimated by drying and weighing. Hot water dispersibility of UHF radiation treated starches according to this invention is sometimes, though not always, increased by comparison with the untreated starches, frequently by a factor of 10% or more. Improved hot water dispersibility is of potential value in various applications.

Example 1 demonstrates changes in crystallinity of maize starch. Example 2 to 4 and 6 show changes in rheological properties, crystallinity and dispersibility of various starches. Examples 5 and 7 show changes in susceptibility to amylolytic enzyme attack.

In all Examples it was determined that the starches treated with UHF radiation had not thereby been significantly gelatinized, and that the temperature had not risen above 100°C during treatment.

Example 1

Granular maize starch having a moisture content of 35% by weight is subjected for various times to UHF radiation at a power of 300W and a frequency of 2450 MHz. The results are set out in Table 1.

TABLE 1

Crystallinity of starch after UHF treatment

| Treatment time (seconds) | 12% Moisture | | 20% Moisture | | 35% Moisture | |
|---|---|---|---|---|---|---|
| | Max temp (°C) | Crystallinity | Max temp (°C) | Crystallinity | Max temp (°C) | Crystallinity |
| 0 | 20 | 0.5 | 20 | 0.45 | 20 | 0.45 |
| 20 | 59 | 0.40 | | | | |
| 25 | | | | | 65 | 0.071 |
| 30 | 74 | 0.17 | 70 | 0.08 | 73 | 0.03 |
| 35 | 80 | 0.15 | 75 | 0.06 | 82 | 0.03 |
| 40 | 91 | 0.09 | 86 | 0.06 | 90 | 0 |
| 45 | | | 93 | 0.04 | 97 | 0 |
| 50 | 96 | 0.07 | 97 | 0 | | |
| 55 | | | 98 | 0 | | |
| 60 | 100 | 0 | 99 | 0 | 98 | 0 |

Example 2

Preparation of maize starch having low viscosity.

A normal granular maize starch adjusted to a water content of 36% by addition of water is distributed at a thickness of 3 cm across a conveyor belt (40 cm wide) and subjected to UHF radiation in a tunnel 5.5 m long at a power of 30 KW and a frequency of 2450 MHz. In this tunnel, the radiation is actually emitted over a length of only about 2 metres. The radiation is absorbed by the starch over a length which is greater than 2 metres but is not easily determined. It is here assumed that the starch is subjected to the radiation over the entire length of the tunnel. The speed of movement of the conveyor belt is adjusted respectively to 2.8 m/mm, 1.1 m/mm, 0.55 m/mm, giving treatment times of 2, 5 and 10 minutes respectively. The thus-treated starch leaves the tunnel at a temperature between 95° and 98°C. Characteristic properties of the starches compared to untreated maize starch are given in the following Table 2.

TABLE 2

| Treatment time (minutes) | Brabender normal peak (P) retrogradation (R) | Enzymatic Brabender peak | Crystallinity |
|---|---|---|---|
| Control | P 360 | 700 | .46 |
| | R 700 | | |
| 2 | P 280 | 400 | .02 |
| | R 680 | | |
| 5 | P — | 0 | .02 |
| | R 500 | | |
| 10 | P — | | |
| | R 300 | 0 | 0 |

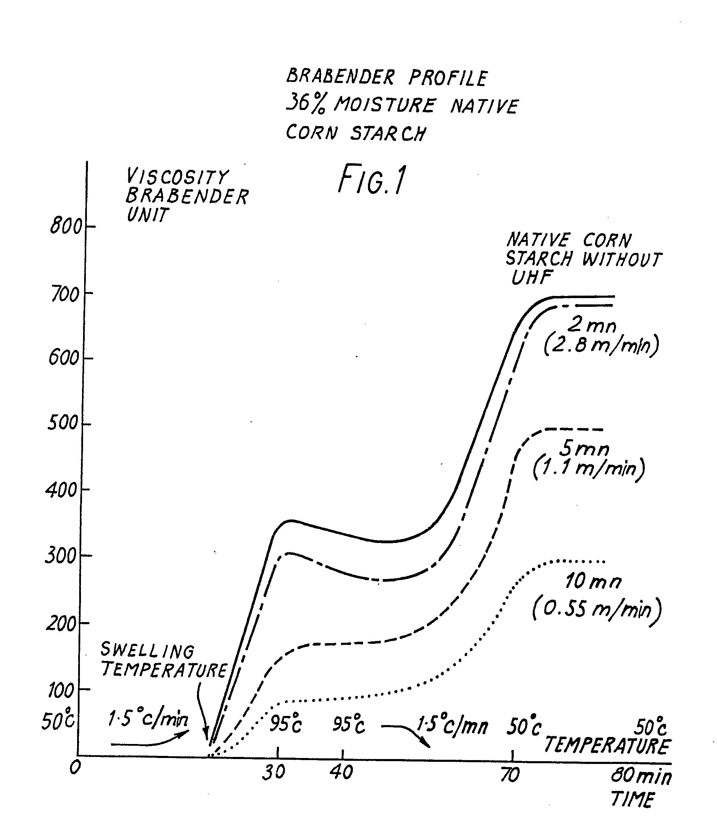

Figure 1 of the accompanying drawings is a graph showing viscosity in Brabender units against time and temperature. The peak and retrogradation viscosities reported in Table 2 are taken from the profiles in

## 0 059 050

this figure. It will be noted that UHF treatment reduces both the peak and the retrogradation viscosities, and that this reduction is more marked for longer treatment times. In fact, the samples treated for 5 and 10 minutes show no real peak viscosity in the Brabender profile, and this is indicative that the crystallinity of these starches has been substantially completely destroyed.

The Brabender enzymatic peak viscosity figures are obtained by a different but standard technique. Again, the absence of a Brabender enzymatic peak viscosity for starch treated for 5 and 10 minutes indicates that the crystalline regions of these starches have been substantially completely destroyed by the UHF radiation.

The swelling temperature of the starch is indicated by the point at which the profile starts to rise steeply from the ordinate. It will be noted that this temperature is not greatly altered by UHF treatment of corn starch.

Example 3
Preparation of native maize starch of low viscosity.

In the same apparatus and under the same conditions as Example 2, a granular native maize starch was adjusted to the following water contents 28%, 36%, 46%, and treated by means of UHF radiation of frequency 2450 MHz and power 30 KW, using a speed of movement of the conveyor belt of 1.1 m/mn and thus a treatment time of 5 minutes. Characteristic properties of this starch after treatment compared to those of the starting maize starch are given in Table 3 below.

TABLE 3

| Water content of starch before UHF treatment (% wt) | Brabender normal peak (P) retrogradation (R) | Enzymatic brabender peak | Crystallinity | Hot water dispersibility % wt |
|---|---|---|---|---|
| Control | P 360 | | | |
| | R 700 | 700 | .46 | 52 |
| 28 | P 300 | | | |
| | R 700 | 420 | .43 | 54 |
| 36 | P — | 0 | .21 | 61 |
| | R 500 | | | |
| 46 | P — | 0 | 0 | 59 |
| | R 300 | | | |

Example 4
Treatment of native potato starch.

Native potato starch adjusted to water contents 26%, 38%, 41% under the conditions set out in Examples 2 and 3 is treated with UHF radiation of frequency 2450 MHz and power 30 KW, the speed of movement of the conveyor belt being maintained at 1.1 m/mm and the treatment time at 5 minutes.

Characteristic properties of this starch after treatment, compared to those of the starting potato starch are set out in the following Table 4.

## 0 059 050

TABLE 4

| Water content of the potato starch before UHF treatment (% wt) | Brabender normal peak (P) retrogradation (R) | Crystallinity | Hot water dispersibility % wt |
|---|---|---|---|
| Control | P 3920 | .36 | 40 |
|  | R 1320 |  |  |
| 19 | P 3300 | .11 | 39 |
|  | R 1700 |  |  |
| 26 | P 2500 | .05 | 40 |
|  | R 1980 |  |  |
| 38 | P 2150 | .01 | 54 |
|  | R 2320 |  |  |
| 41 | P 1800 | 0 | 57 |
|  | R 2080 |  |  |

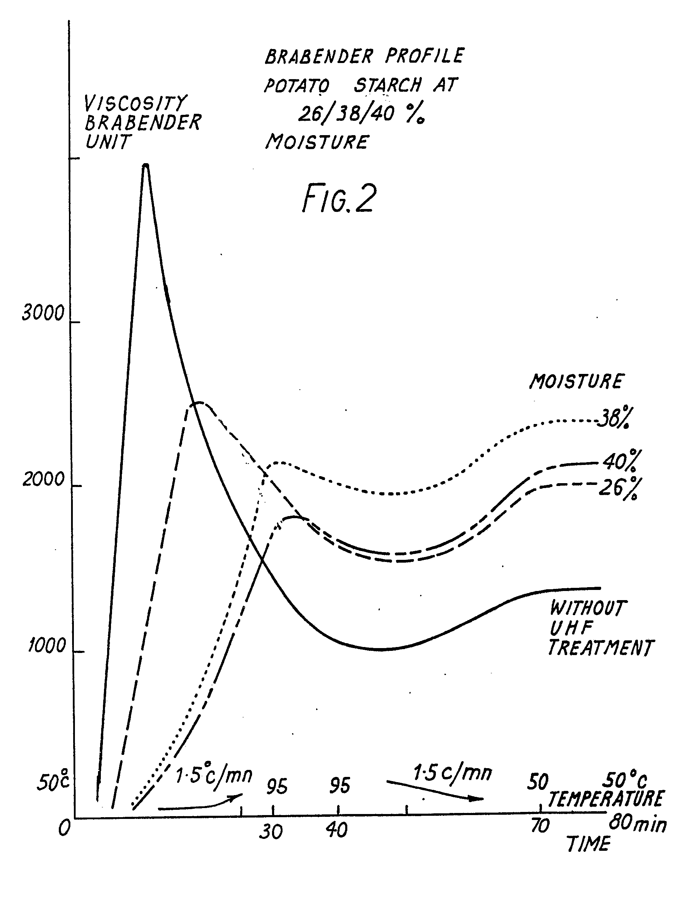

Figure 2 of the accompanying drawings is a graph of viscosity in Brabender units against temperature and time, showing profiles obtained according to Example 4, and from which the figures in Table 4 above have been obtained. Potato starch differs from corn starch in that the peak Brabender viscosity is greater than the retrogradation viscosity; as shown in the figure, UHF radiation treatment reduces the peak viscosity (this is a characteristic feature of UHF treatment), but retrogradation viscosity is somewhat increased. UHF radiation treatment also increases the swelling temperature of the starch, a feature which may be valuable in certain applications.

Example 5

Treatment of native maize starch in the granular state, intended for the preparation of a hydrolysate rich in maltose.

A native granular maize starch was adjusted to 35% water content and separated into 3 portions. The first portion served as control. The second portion was treated under the conditions of Example 2 with UHF radiation of frequency 2450 MHz and power 30 KW. The speed of movement of the conveyor belt was maintained at 1.1 m/mm giving a treatment time of 5 minutes. The third portion was subjected to this UHF radiation treatment twice, giving a total treatment time of 10 minutes.

The portions of starch thus treated, without being dried, were dispersed in water so as to prepare suspensions containing 32% of material on a dry weight basis. These three suspensions were hydrolyzed simultaneously first by a commercially available α-amylase (60000 u/g, 0.125% on dry starch) at pH 6.2 and 95°C, then by a commercially available β-amylase (70 u/g, 30 units per 1000 g of dry starch) at pH 4.8 and 55°C. The syrups resulting from these hydrolyses after 10 hours are set out in the following Table 5.

**0 059 050**

TABLE 5
Composition of starch hydrolysates (wt %)

| Sugar | Untreated native maize starch | Single treatment by UHF radiation | Double treatment by UHF radiation |
|---|---|---|---|
| Dextrose | 0.9 | 0.9 | 0.7 |
| Maltose | 42.0 | 46.8 | 52.4 |
| Maltotriose | 25.9 | 20.0 | 18.4 |
| DP4 | 5.5 | 0 | 0 |
| DP5$^+$ | 25.7 | 32.2 | 28.4 |
| DE | 41.1 | 40.7 | 42.9 |

In the above table, DP4 refers to sugars having a degree of polymerization of four, DP5$^+$ refers to oligosaccharides having a degree of polymerization of five or more, and DE stands for Dextrose Equivalent. The main difference between hydrolysates is the proportion of moltose, which is greater in the hydrolysate from starch subjected once or twice to UHF radiation according to this invention. This suggests that the UHF radiation has broken the chain branching α 1—6 linkages, thus reducing the proportions of the starch chains not available for hydrolysis by β-amylase.

Example 6
UHF treatment of various starches.

Various native starches were subjected as a 3 cm deep layer under different conditions to UHF radiation in a tunnel 5.5 m long and at a power of 30 KW and a frequency of 2450 MHz. The nature of the starch, the conditions of treatment and properties of the resulting products are set out in Table 6 below.

TABLE 6
Brabender viscosities of various starches after UHF treatment

| Kind of starch | Moisture content (% wt) | Treatment time (minutes) | Brabender Viscosity | | Crystal-linity | Hot water dispersi-bility % wt |
|---|---|---|---|---|---|---|
| | | | Peak | Retro-grada-tion | | |
| Potato | 36 | Control | 3900 | 1350 | .36 | |
| | 36 | 5 | 3300 | 1750 | .02 | |
| | 36 | 7.5 | 3100 | 1800 | 0 | |
| | 36 | 10 | 1900 | 900 | 0 | |
| Waxy corn | | Control | 1200 | 550 | .30 | 23 |
| | 34 | 5 | 1050 | 500 | .03 | 24 |
| | 40 | 5 | 850 | 450 | .05 | 29 |
| | 49 | 5 | 300 | 250 | 0 | 44 |
| Tapioca | | Control | 900 | 580 | .45 | 29 |
| | 19 | 5 | 800 | 600 | .11 | 27 |
| | 33 | 5 | 450 | 630 | .08 | 28 |
| | 40 | 5 | 380 | 620 | .02 | 29 |

8

Example 7

Beta amylolysis of raw starch.

Regular maize starch was divided into two portions. One portion was treated at 35% moisture content for 45 seconds with UHF radiation of frequency 2450 MHz at 600 W.

1.9 g of each portion was dispersed in 70 ml water and there was added 80 ml of buffer (pH 5.2) and 30 ml of a dispersion of beta amylase at 10 mg/ml. The dispersion was maintained at 30°C, and the maltose content was determined at intervals, with the results shown in Table 7.

The β-amylase used was a pure product derived from barley and having an activity of 10 u/mg. (1 u means that 1.0 mg of maltose is produced from starch in 3 minutes at 20°C and pH 4.8).

TABLE 7

| Beta-amylolysis time (hrs) | % wt Maltose released | |
| --- | --- | --- |
| | Regular starch | UHF radiation treated |
| 0 | 0 | 0 |
| 3 | 0 | 11.9 |
| 4 | 2.9 | 20.4 |
| 23 | 5.2 | 37.5 |
| 47 | 12.1 | 48.9 |
| 69 | 22.0 | 55.0 |
| 140 | 37.4 | 62.3 |
| 210 | 44.0 | 66.5 |
| 280 | 47.5 | 68.0 |
| 350 | 48.0 | 68.0 |

These results show clearly the effect of UHF radiation treatment on speed and extent of beta-amylolysis.

**Claims**

1. A method of modifying ungelatinized starch, which method comprises subjecting a starting mixture of ungelatinized starch and water to UHF radiation under conditions chosen so that the starch reaches a maximum temperature of no greater than 100°C characterized in that the starting mixture contains from 25% to 60% by weight of water based on the combined weight of starch and water, that the starch is not significantly gelatinized as a result of the treatment, and that the final crystallinity of the starch is not more than half that of the untreated starch.

2. A method as claimed in claim 1, wherein the starting mixture contains from 25% to 50% by weight of water on the combined weight of starch and water.

3. A method as claimed in claim 1 or claim 2, wherein the UHF radiation has a frequency of 2450 MHz.

4. A method as claimed in any one of claims 1 to 3, wherein the time of treatment is from 20 seconds to 15 minutes.

5. A modified ungelatinized starch obtainable by the method of claim 1.

6. Starch as claimed in claim 5 having either no peak Brabender viscosity or a peak Brabender viscosity not more than half that of the untreated starch.

7. Starch as claimed in claim 5 or claim 6 having a dispersibility in water at 90°C at least 10% greater than that of the untreated starch.

8. Starch as claimed in any one of claims 5 to 7 having a susceptibility to amylotyic enzyme attack greater than that of the untreated starch.

9. A method as claimed in any one of claims 1 to 4, wherein the treated starch is formed into an aqueous slurry and subjected to enzymatic hydrolysis.

10. A method as claimed in claim 9, wherein the treated starch is subjected to the action of alpha-amylase and then to the action of beta-amylase.

**Patentansprüche**

1. Verfahren zur Modifizierung nicht gelatinierter Stärke, wobei ein Anfangsgemisch von nicht gelatinierter Stärke und Wasser unter Bedingungen, die so gewählt sind, daß die Stärke eine Höchsttemperatur von nicht mehr als 100°C erreicht, einer UHF-Bestrahlung ausgesetzt wird, dadurch gekennzeichnet, daß das Anfangsgemisch zwischen 25 und 60 Gew.-% Wasser, bezogen auf das Gesamtgewicht von Stärke und Wasser, enthält, daß die Stärke als Folge dieser Behandlung nicht wesentlich gelatiniert ist und daß die Endkristallinität der Stärke nich mehr als die Hälfte jener de unbehandelten Stärke ist.

2. Verfahren nach Anspruch 1, dadurch gekennzeichnet, daß das Anfangsgemisch zwischen 25 und 50 Gew.-% Wasser bezogen auf das Gesamtgewicht von Stärke und Wasser enthält.

3. Verfahren nach Anspruch 1 oder 2, dadurch gekennzeichnet, daß die UHF-Bestrahlung mit einer Frequenz von 2450 MHz erfolgt.

4. Verfahren nach irgendeinem der Ansprüche 1 bis 3, dadurch gekennzeichnet, daß die Behandlungsdauer zwischen 20 Sekunden und 15 Minuten liegt.

5. Modifizierte, nicht gelatinierte, gemäß dem Verfahren nach Anspruch 1 hergestellte Stärke.

6. Stärke nach Anspruch 5, dadurch gekennzeichnet, daß sie entweder keine Spitzenviskosität nach Brabender aufweist oder eine Spitzenviskosität nach Brabender die nicht mehr als die Hälfte jener der unbehandelten Stärke ausmacht.

7. Stärke nach Anspruch 5 oder 6, dadurch gekennzeichnet, daß ihre Dispersionsfähigkeit in Wasser bei 90°C um 10% größer als die der unbehandelten Stärke ist.

8. Stärke nach irgendeinem der Ansprüche 5 bis 7, dadurch gekennzeichnet, daß ihre Suszeptibilität zur Aufspaltung durch amylolitische Enzyme größer als die der unbehandelten Stärke ist.

9. Verfahren nach irgendeinem der Ansprüche 1 bis 4, dadurch gekennzeichnet, daß sich die Stärke in wässriger Aufschlämmung befindet und enzymatischer Hydrolyse unterworfen wird.

10. Verfahren nach Anspruch 9, dadurch gekennzeichnet, daß die behandelte Stärke der Einwirkung von Alpha-Amylase und dann der Einwirkung von Beta-Amylase unterworfen wird.

**Revendications**

1. Procédé de modification d'amidon non gélatinisé, procédé qui consiste à soumettre un mélange de départ formé d'amidon non gélatinisé et d'eau à une irradiation à ultrahaute fréquence dans des conditions choisies de manière que l'amidon atteigne une température maximale n'excédant pas 100°C, caractérisé en ce que le mélange de départ contient 25 à 60 % en poids d'eau sur la base du poids total d'amidon et d'eau, en ce que l'amidon n'est pas notablement gélatinisé comme conséquence du traitement, et en ce que la cristallinité finale de l'amidon ne dépasse pas la moitié de celle de l'amidon non traité.

2. Procédé suivant la revendication 1, dans lequel le mélange de départ contient 25 à 50% en poids d'eau sur la base du poids total de l'amidon et de l'eau.

3. Procédé suivant la revendication 1 ou la revendication 2, dans lequel l'irradiation à ultra-haute fréquence a une fréquence de 2450 MHz.

4. Procédé suivant l'une quelconque des revendications 1 à 3, dans lequel la durée de traitement va de 20 secondes à 15 minutes.

5. Amidon non gélatinisé modifié, pouvant être obtenu par le procédé de la revendication 1.

6. Amidon suivant la revendication 5, ne présentant pas de pic de viscosité Brabender ou ayant un pic de viscosité Brabender ne dépassant pas la moitié de celui de l'amidon non traté.

7. Amidon suivant la revendication 5 ou la revendication 6, ayant une dispersibilité dans l'eau à 90°C supérieure d'au moins 10% à cell de l'amidon non traité.

8. Amidon suivant l'une quelconque des revendications 5 à 7, ayant une sensibilité à l'attaque enzymatique amylolytique superieure à celle de l'amidon non traité.

9. Procédé suivant l'une quelconque des revendications 1 à 4, dans lequel l'amidon traité est transformé en une suspension aqueuse et soumis à l'hydrolyse enzymatique.

10. Procédé suivant la revendication 9, dans lequel l'amidon traité est soumis à l'action d'une alphaamylase, puis à l'action d'une bêta-amylase.

BRABENDER PROFILE
36% MOISTURE NATIVE
CORN STARCH

FIG.1

0 059 050

FIG.2

BRABENDER PROFILE POTATO STARCH AT 26/38/40 % MOISTURE

VISCOSITY BRABENDER UNIT

2